Europäisches Patentamt

(19) European Patent Office

Office européen des brevets

(11) Publication number: **0 125 131**
**B1**

(12) **EUROPEAN PATENT SPECIFICATION**

(45) Date of publication of patent specification: 02.03.88

(51) Int. Cl.⁴: **F 16 B 25/00**

(21) Application number: 84303054.5

(22) Date of filing: 08.05.84

(54) **Drill tip and fastener employing same.**

(30) Priority: 09.05.83 US 492609

(43) Date of publication of application:
14.11.84 Bulletin 84/46

(45) Publication of the grant of the patent:
02.03.88 Bulletin 88/09

(84) Designated Contracting States:
AT BE CH DE FR GB IT LI LU NL SE

(56) References cited:
AT-B- 369 870
US-A-3 221 588
US-A-3 710 676
US-A-4 114 508
US-A-4 192 217

(73) Proprietor: **CONSTRUCTION FASTENERS, INC.**
**Van Reed Road at Spring Street P.O. Box 6326**
**Wyomissing Pennsylvania 19610 (US)**

(72) Inventor: **Hulsey, Tommy R.**
**2103 Rosewood Court**
**Wyomissing Pennsylvania 19610 (US)**

(74) Representative: **Newby, Martin John et al**
**J.Y. & G.W. Johnson Furnival House 14-18 High**
**Holborn**
**London WC1V 6DE (GB)**

Courier Press, Leamington Spa, England.

## Description

This invention relates to drill tips and to fasteners employing same; it relates especially to drill screws suitable for use in holding insulation to the walls or roofs of buildings using metal decks and walls.

There are a variety of applications in which it is desired to form an opening through a sheet of metal, rapidly and without requiring excessively large pressures. It is often desirable to do this in conjunction with the insertion of a threaded drill screw into the opening so formed in the work-piece.

For example, in the building construction industry it is often desirable to secure material, such as thermal insulation, to the sheet metal which forms the walls or roofs of metal buildings. To do so, it is common to employ a so-called drill screw which, when rotationally driven by a drill tool, pierces the insulation and sheet metal and then screws itself into and partially through the hole formed in the sheet metal, until a large washer-like plate under the head of the drill screw is pulled tightly against the exterior of the insulation to secure it in place.

The sheet metal used for this purpose is usually of #18 to #26 gauge steel, corresponding to sheet thicknesses of from about 1.27—0.76 mm (0.050—0.030 inch). While steel sheet having a thickness near the lower end of this range (e.g. #22 gauge) can usually be drilled and the drill screw inserted and seated quite easily and quickly, the time and force necessary to insert a drill screw properly in thicker steel, e.g. #18 gauge steel, are often much greater than is desirable, and with some drill screws this cannot be accomplished at all.

One type of drill screw which has been employed for such purposes is similar to that shown in US—A—3 221 588. While such a drill screw will generally pierce the steel sheet and seat itself in #22 gauge steel in about 3 to 4 seconds with an applied force of about 13.61 kg (30 pounds), in the case of #18 gauge steel it may more typically require about 6 to 8 seconds, and in some cases it may not succeed in piercing the metal at all.

Another known type of drilling device is disclosed in AT—A—369 870 and comprises a shaft having a driving end adapted to be rotationally driven to rotate the shaft about its longitudinal axis and an entering end portion which tapers towards an initial work-piece contacting end tip portion which is displaced to one side of said axis, said entering end portion including a cutting edge extending obliquely outwardly from said end tip portion on one side of, and at a predetermined angle with respect to, said axis, so as to provide initial eccentric drilling of a work-piece.

An aim of the present invention is to provide a drilling device of the kind referred to in the preceding paragraph but having a modified end entering portion which gives the device a rapid cutting action.

According to the invention a drilling device comprising a shaft having a driving end adapted to be rotationally driven to rotate the shaft about its longitudinal axis and an entering end portion which tapers towards an initial work-piece contacting end tip portion which is displaced to one side of said axis, said entering end portion including cutting edge means which comprises a primary cutting edge extending obliquely outwardly from said end tip portion on one side of, and at a predetermined first angle with respect to, said axis, so as to provide initial eccentric drilling of a work-piece, is characterised in that said cutting edge means also comprises a secondary cutting edge extending obliquely outwardly at a predetermined second angle with respect to said axis and opposite said primary cutting edge with respect to said axis, so as to assist said primary cutting edge in drilling said work-piece after drilling has been started by said primary cutting edge, said primary and secondary cutting edges both being back-relieved and being defined by first and second slots, respectively, in said entering end portion, and in that said entering end portion comprises a frusto-conical portion which has an axis common with said longitudinal axis, which diverges in the direction towards said driving end at a third angle to said longitudinal axis which is smaller than said first and second angles and which extends from part of said entering end portion containing said primary and secondary cutting edges to the diameter of said shaft, whereby said frusto-conical portion serves to enlarge an opening made in the work-piece by said primary and secondary cutting edges as said device is rotated and forced further into said opening.

When the device is a drill screw heaving threads on the shaft, the frusto-conical portion preferably diverges outwardly to, and terminates at, the root diameter of the threads on the shaft. In a preferred form, each of said slots extends substantially throughout the length of said entering end portion, and each slot may define a pair of slot faces extending substantially radially and substantially at right angles to each other.

With a drilling device in accordance with the invention, the drilling of an appropriate enlargement of the opening in the work-piece may be accomplished as much as ten times faster than with other commercially used drilling tips, without requiring additional pressure during the drilling operation. This makes it possible, for example, for one installing thermal insulation on the exterior of a metal building to pass the tip of the drill screw through the insulation and the underlying sheet metal, and to thread the screw into the thus formed opening and bring the washer-like plate tightly down against the insulation, easily and very quickly, thus saving time of installation and making the job of the installer much easier.

The invention will now be described in greater detail, by way of example, with reference to the accompanying drawings, in which:

Figure 1 is a front elevation view of a drill screw embodying the present invention, with the portion of the screw adjacent the driven or head end omitted for convenience and exposition;

Figure 2 is a top view of the screw of Fig. 1, taken along lines 2—2 of Fig. 1;

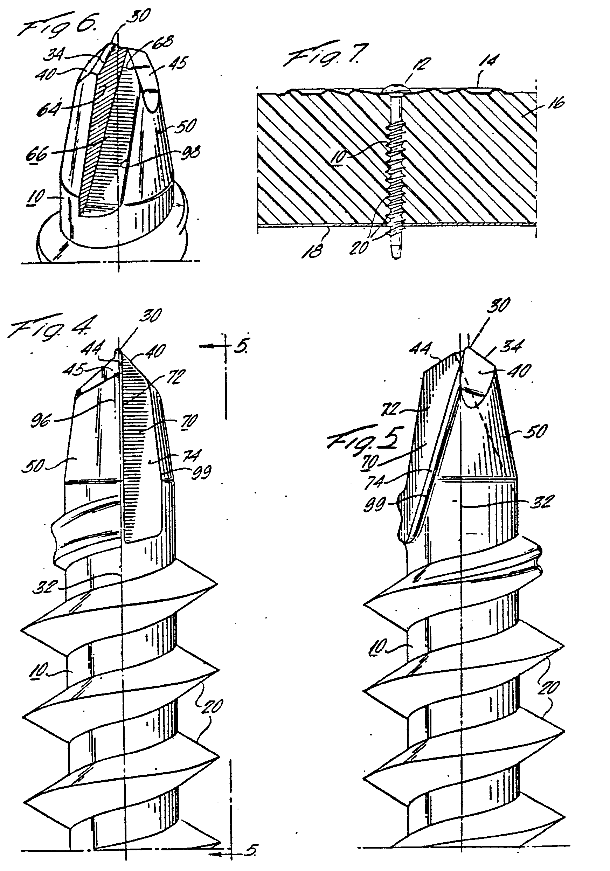

Figure 3 is a side view of the screw of Fig. 1, as viewed along lines 3—3 of Fig. 1;

Figure 4 is a side view of the device of Fig. 1, taken along lines 4—4 of Fig. 1;

Figure 5 is a side view of the device of Fig. 4, taken along lines 5—5 of Fig. 4;

Figure 6 is a perspective view of the drill tip of the device shown in the other figures;

Figure 7 is a vertical sectional view showing an assembly of thermal insulation, roof decking, fastener and holding plate, illustrating one particular use of a drill screw made according to the present invention; and

Figure 8 is a front view of a headed cylinder and a pair of opposed dies which are brought together to form the drill point shown in the other figures.

Referring now to the embodiment of the invention specifically shown in the drawings by way of example, in Fig. 7 a drill screw 10 having a driving head 12 extends through a holding plate 14 of metal or plastic, and urges the latter plate against the upper surface of a layer of thermal insulation 16 so as to secure it tightly to an underlying steel sheet 18 constituting a portion of the roof of a metal building. The screw is held securely to the metal sheet 18 by the threads 20 of screw 10, which engage in a corresponding opening in sheet 18 which has been formed by the drilling action of the screw as it was installed. That is, with the insulation in place the installer places the screw 10 in a rotary drilling device and presses the working tip of the screw against the top of the insulation with the plate 14 in position under the head 12; with the drilling tool turned on, the operator then presses directly downwardly normal to sheet 18, so that the screw drills its way through the layer of insulation and through the underlying metal sheet 18 until plate 14 is clamped tightly against the upper surface of thermal insulation 16 and the screw held by engagement of the threads 20 in the opening of plate 18 as mentioned above. While the drill tip of the invention, and the drill screw embodying it, represent particularly effective embodiments of the present invention, the invention may be embodied in other devices where appropriate.

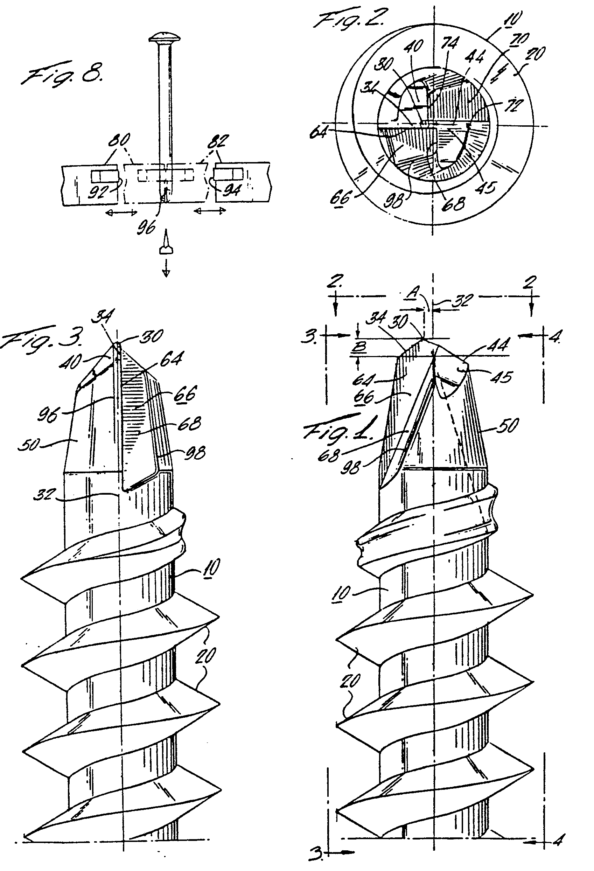

Referring now to the other figures, it will be seen that the extreme forward end 30 of the drill tip which first engages the work-piece during the drilling operation is displaced laterally on one side of the longitudinal axis 32 of the screw, by the distance A. This initially-contacting end portion represents the beginning of a primary cutting edge 34 which extends obliquely outwardly from the end portion 30 as shown in Fig. 1, for example, and is back-relieved to provide an effective cutting operation, as shown by the back-relief area 40 in Fig. 6, for example.

Upon initial contacting of the rotating end portion 30 of the screw with the work-piece, the laterally displaced end portion 30 rotates eccentrically, i.e. at a position displaced from the axis of rotation 32, an action which has been found to provide extremely rapid cutting of the metal and perforation thereof in a very short period of time. Typically, the depth B of the end portion 30 for which the primary cutting edge alone is providing the cutting action may be slightly larger than the thickness of the sheet metal being cut, so that perforation is accomplished during the eccentric drilling operation. From that point onward, both the primary cutting edge 34 and a secondary cutting edge 44 are operative to accomplish enlargement of the opening by cutting. Cutting edge 44 is on the opposite side of the longitudinal axis from cutting edge 34, and is provided with back-relief 45.

The conical portion 50 of the drill tip extends from the ends of the cutting edges positioned nearest the head end of the screw to the adjacent end of the cylindrical portion of the shaft of the screw. That is, the conical portion diverges from the ends of the primary and secondary cutting edges until it reaches a diameter substantially equal to that of the shaft. In this case, in which the shaft is threaded, the diameter achieved by the diverging conical portion is preferably substantially equal to the root diameter of the screw.

The primary cutting edge 34 is formed not only by the back-relief portion but also by the substantially planar face 64 of slot 66, the other face 68 of which slot lies in the plane substantially at right angles to face 64. Similarly, the secondary cutting edge 44 is formed by the planar face 72 of a slot 70, the other face 74 of which slot is substantially at right angles to face 72.

In operation then, as described above the screw is rotated and urged against the work-piece; the off-center end of the drill tip accomplishes initial extremely rapid drilling and perforation of the work-piece, after which the primary and secondary cutting edges both cut so as to enlarge the hole; the conical portion of the screw thereafter causes a further widening of the hole to the desired diameter of the shaft of the screw, primarily by a reaming or extruding type of widening action.

As an example of the efficacy of the device of the invention, screws of the general type known in the prior art and described in US—A—3 221 588 typically require about 3 seconds to about 4 seconds to drill through and seat properly when the metal sheet being drilled is #22 gauge steel of the type commonly used for metal buildings; with the device of the invention, on the other hand, such drilling and seating of the screw is typically accomplished in from about 0.5 to 0.8 seconds in the specified #18 gauge material.

The drill screw shown may be made by conventional techniques. Thus, a cylindrical shaft having a conventionally formed head thereon may, as shown in Fig. 8, be positioned between a pair of dies 80 and 82 in a pinch-pointing machine such that the two dies are automatically banged together to form the desired point; extra material extruded from the two halves of the dye will generally fall off by itself, but if not may be readily broken off. The shape of the cavities in the dies of course corresponds to the desired external shape of the drill tip. In the preferred form of the invention, the two surfaces 92 and 94 of the dies are positioned so that they strike each other, and prevent further closing of the dies toward each other, before the remainder of the dies strike each other, thereby leaving a narrow web such as 96 between the two formed halves of the drill tip. The drill screw is thereafter heat treated in conventional manner to harden it.

Because of the increased speed of operation of the drill screw, an operator who is, for example, installing thermal insulation on the roof of a metal building may accomplish his task much more quickly, and much more easily.

In one representative example of a drill screw in accordance with the present invention, a headed screw blank 4 mm (0.157 inch) diameter is pinch-pointed between the two dies to form the drill tip. The end portion 30 of the drill tip is centred about $0.25 \pm 0.13$ mm $(0.010 \pm 0.005$ inch) from the longitudinal axis 32 of the screw blank. Both the primary and the secondary cutting edges are at 60° to the axis 32. The conical portion extends at an angle of 12.5° to the axis 32, and the slot edges 98 and 99 extend at 22.5° to the axis 32. The length of the primary cutting edge is about 0.89 mm (0.035 inch), and of the secondary cutting edge about 1.02 mm (0.040 inch). The thickness of the web may be about 0.20 mm (0.008 inch). The threads may be rolled after pinch-pointing, with a major diameter of 5.46 mm (0.215 inch) and a minor diameter of 3.10 mm (0.122 inch). The screw material may be carbon steel.

The drill tip configuration of the invention is useful in some cases where there are no threads adjacent the tip, or even no threads at all.

## Claims

1. A drilling device (10) comprising a shaft having a driving end (12) adapted to be rotationally driven to rotate said shaft about its longitudinal axis (32) and an entering end portion (30, 50) which tapers towards an initial workpiece contacting end tip portion (30) which is displaced to one side of said axis (32), said entering end portion (30, 50) including cutting edge means which comprises a primary cutting edge (34) extending obliquely outwardly from said end tip portion (30) on one side of, and at a predetermined first angle with respect to, said axis (32), so as to provide initial eccentric drilling of a workpiece, characterised in that said cutting edge means also comprises a secondary cutting edge (44) extending obliquely outwardly at a predetermined second angle with respect to said axis (32) and opposite said primary cutting edge (34) with respect to said axis (32), so as to assist said primary cutting edge (34) in drilling said workpiece after drilling has been started by said primary cutting edge (34), said primary and secondary cutting edges (34, 44) both being back-relieved and being defined by first and second slots (66, 70), respectively, in said entering end portion (30, 50), and in that said entering end portion (30, 50) comprises a frustoconical portion (50) which has an axis common with said longitudinal axis (32), which diverges in the direction towards said driving end (12) at a third angle to said longitudinal axis (32) which is smaller than said first and second angles and which extends from part of said entering end portion (30, 50) containing said primary and secondary cutting edges (34, 44) to the diameter of said shaft, whereby said frusto-conical portion (50) serves to enlarge an opening made in the work-piece by said primary and secondary cutting edges (34, 44) as said device is rotated and forced further into said opening.

2. A drilling device according to claim 1, characterised in that said device is a drill screw (10) having threads (20) on said shaft and in that frusto-conical portion (50) diverges outwardly to, and terminates at, the root diameter of said threads on said shaft.

3. A drilling device according to claim 1 or 2, characterised in that each of said slots (66, 70) extends substantially throughout the length of said entering end portion (30, 50).

4. A drilling device according to any of the preceding claims, characterised in that each of said slots (66, 70) defines a pair of slot faces extending substantially radially and substantially at right angles to each other.

5. A drilling device according to any of the preceding claims, characterised in that each of said slots (66, 70) extends substantially axially of said end portion (30, 50).

## Patentansprüche

1. Bohrvorrichtung (10), umfassend eine Welle mit einem antreibenden Ende (12), das so ausgeführt ist, daß es in drehbarer Weise angetrieben werden kann, um die genannte Welle um ihre Längsachse (32) zu drehen, und einem eindringenden Endabschnitt (30, 50), der in Richtung auf einen anfänglichen, mit dem Werkstück in Berührung kommenden Spitzenabschnitt (30), der zu einer Seite der genannten Achse (32) hin versetzt angeordnet ist, konisch zuläuft, wobei der genannte eindringende Endabschnitt (30, 50) eine Schneidkantenvorrichtung aufweist, die eine primäre Schneidkante (34) umfaßt, die vom genannten Spitzenabschnitt (30) ausgehend quer nach außen auf einer Seite der genannten Achse (32) und mit einem vorbestimmten ersten Winkel im Verhältnis dazu verläuft, um so ein anfängliches exzentrisches Bohren eines Werkstücks zu ermöglichen, dadurch gekennzeichnet, daß die genannte Schneidkantenvorrichtung ebenfalls eine sekundäre Schneidkante (44) umfaßt, die mit einem vorbestimmten zweiten Winkel im Verhältnis zur genannten Achse (32) quer nach außen und gegenüber der genannten primären Schneidkante (34) im Verhältnis zur genannten Achse (32) verläuft, um so die genannte primäre Schneidkante (34) beim Bohren des genannten Werkstücks zu unterstützen, nachdem der Bohrvorgang von der genannten primären Schneidkante (34) eingeleitet wurde, wobei die genannten primären und sekundären Schneidkanten (34, 44) jeweils hinterdreht und von ersten bzw. zweiten Schlitzen (66, 70) im genannten eindringenden Endabschnitt (30, 50) definiert sind, und daß der genannte eindringende Endabschnitt (30, 50) einen stumpfkegeligen Abschnitt (50) umfaßt, der eine gemeinsame Achse mit der genannten Längsachse (32) besitzt, die in Richtung auf das genannte antreibende Ende (12) mit einem dritten Winkel zur genannten Längsachse (32) abweicht, wobei dieser Winkel kleiner als die genannten ersten und zweiten Winkel ist, und der von einem Teil des genannten eindringenden Endabschnitts (30, 50) mit den genannten primären und sekundären Schneidkanten (34, 44) zum Durchmesser der genannten Welle hin verläuft, wobei der genannte stumpfkegelige Abschnitt (50) dazu dient, eine Öffnung zu vergrößern, die im Werkstück von den genannten primären und sekundären Schneidkanten (34, 44) geschaffen wurde, während die genannte Vorrichtung gedreht und weiter in die genannte Öffnung hineingetrieben wird.

2. Bohrvorrichtung gemäß Anspruch 1, dadurch gekennzeichnet, daß es sich bei der genannten Vorrichtung um einen Schraubbohrer (10) handelt, der Gewinde (20) an der genannten Welle aufweist, und daß der stumpfkegelige Abschnitt (50) nach außen zum Kerndurchmesser der genannten Gewinde an der genannten Welle hin verläuft und dort endet.

3. Bohrvorrichtung gemäß Anspruch 1 oder 2, dadurch gekennzeichnet, daß jeder der genannten Schlitze (66, 70) im wesentlichen über die Länge des genannten eindringenden Endabschnitts (30, 50) verläuft.

4. Bohrvorrichtung gemäß irgendeinem der vorstehenden Ansprüche, dadurch gekennzeichnet, daß jeder der genannten Schlitze (66, 70) zwei Schlitzflächen definiert, die im wesentlichen radial und im wesentlichen rechtwinklig zueinander verlaufen.

5. Bohrvorrichtung gemäß irgendeinem der vorstehenden Ansprüche, dadurch gekennzeichnet, daß jeder der genannten Schlitze (66, 70) im wesentlichen axial zum genannten Endabschnitt (30, 50) verläuft.

**Revendications**

1. Pièce de perçage (10) comprenant une tige comportant une extrémité d'entraînement (12) propre à être entraînée en rotation pour faire tourner la tige autour de son axe longitudinal (32) et une partie d'extrémité d'attaque (30, 50) qui est taillée en cône vers une pointe d'extrémité (30) pour le contact initial avec l'ouvrage à percer, qui est décalée d'un côté de l'axe (32), la partie d'extrémité d'attaque (30, 50) présentant des arêtes de coupe qui comprennent une arête de coupe primaire (34) s'étendant obliquement vers l'extérieur à partir de la pointe d'extrémité (30) d'un côté de l'axe (32) et sous un premier angle prédéterminé par rapport à celui-ci de manière à assurer le perçage excentrique initial d'un ouvrage, caractérisée en ce que les arêtes de coupe comprennent aussi une arête de coupe secondaire (44) qui s'étend obliquement vers l'extérieur sous un second angle prédéterminé par rapport à l'axe (32), et est opposée à l'arête de coupe primaire (34) par rapport à l'axe (32), de manière à assister l'arête de coupe primaire (34) à percer l'ouvrage lorsque ce perçage a été entamé par l'arête de coupe primaire (34), les arêtes de coupe primaire et secondaire (34, 44) présentant toutes deux de la dépouille et étant définies par une première et une seconde entaille (66, 70), respectivement, dans la partie d'extrémité d'attaque (30, 50), et en ce que la partie d'extrémité d'attaque (30, 50) comprend une partie tronconique (50) dont l'axe et l'axe longitudinal (32) sont communs, qui diverge en direction de l'extrémité d'entraînement (12) sous un troisième angle par rapport à l'axe longitudinal (32) plus petit que le premier et le deuxième angle et qui va de la partie d'extrémité d'attaque (30, 50) contenant les arêtes de coupe primaire et secondaire (34, 44) jusqu'au diamètre de la tige, la partie tronconique (50) servant ainsi à élargir une ouverture ménagée dans l'ouvrage par les arêtes de coupe primaire et secondaire (34, 44) lorsque la pièce de perçage est entraînée en rotation et enfoncée dans l'ouverture.

2. Pièce de perçage suivant la revendication 1, caractérisée en ce qu'il s'agit d'une vis autoperceuse (10) comportant un filetage (20) sur la tige et en ce que la partie tronconique (50) diverge vers l'extérieur jusqu'au diamètre de noyau de filetage de la tige, où elle se termine.

3. Pièce de perçage suivant la revendication 1 ou 2, caractérisée en ce que chacune des entailles (66, 70) s'étend en substance sur toute la longueur de la partie d'extrémité d'attaque (30, 50).

4. Pièce de perçage suivant l'une quelconque des revendications précédentes, caractérisée en ce que chacune des entailles (66, 70) définit deux faces d'entaille qui s'étendent en substance radialement et en substance perpendiculairement l'une à l'autre.

5. Pièce de perçage suivant l'une quelconque des revendications précédentes, caractérisée en ce que chacune des entailles (66, 70) s'étend en substance dans le sens axial de la partie d'extrémité (30, 50).

Fig. 8.

Fig. 2.

Fig. 3.

Fig. 1.

0 125 131

Fig. 6.

Fig. 7.

Fig. 4.

Fig. 5.

2